# EUROPEAN PATENT SPECIFICATION

(11) **EP 2 050 724 B1**
(45) Date of publication and mention of the grant of the patent: **27.08.2014**
(21) Application number: 08017880.9
(22) Date of filing: 13.10.2008
(51) Int. Cl.: C03B 20/00

(54) **Method of manufacturing a silica glass block**
Verfahren zur Herstellung eines Quarzglasblocks
Procédé de fabrication d'un bloc de silice vitreuse

(30) Priority: 17.10.2007 JP 2007270304
(43) Date of publication of application: 22.04.2009
(73) Proprietor: Heraeus Quarzglas GmbH & Co. KG, 63450 Hanau (DE); Shin-Etsu Quartz Products Co., Ltd., Shinjuku-ku Tokyo (JP)
(72) Inventor: Sawazaki, Hiro, Fukui 916-0004 (JP); Sanada, Choji, Fukui 916-0034 (JP)
(74) Representative: Kühn, Hans-Christian

(56) References cited:
- GB-A- 2 075 491
- JP-A- 4 338 122
- JP-A- 6 056 447

## Description

The present invention relates to a method for manufacturing a silica glass block, and more particularly a large silica glass block (diameter no less than 1500mm and thickness no less than 350mm).

### Prior Art

An example of a known conventional method for manufacturing is disclosed in the Japanese Laid-Open Patent Application JP 4338133 A. The document deals with the manufacture of bubble free silica glass bodies.

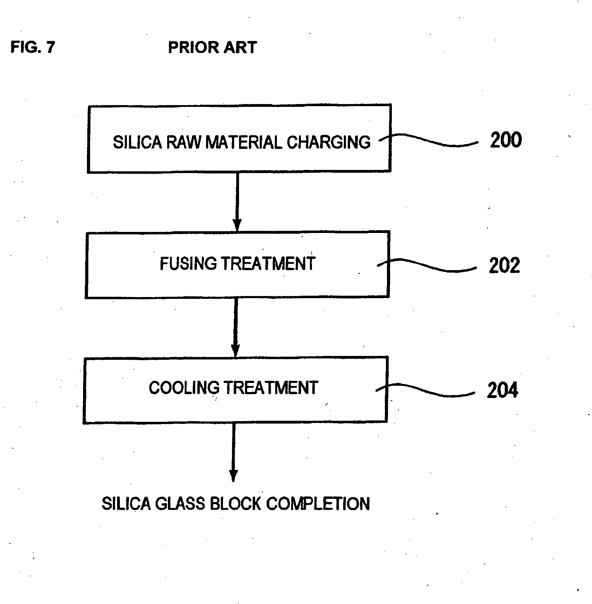

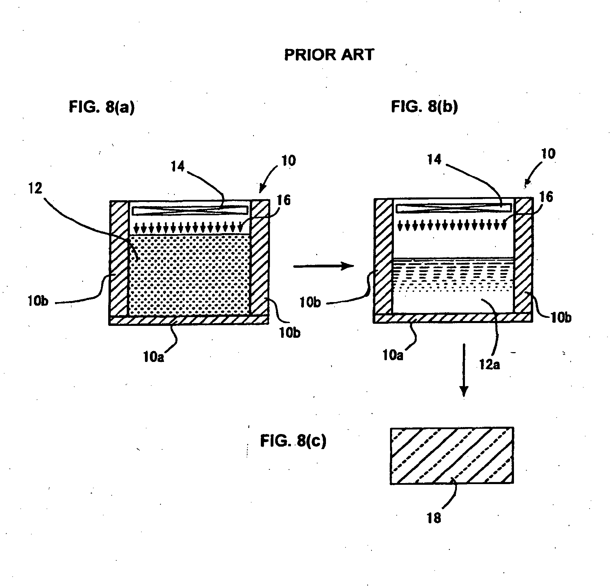

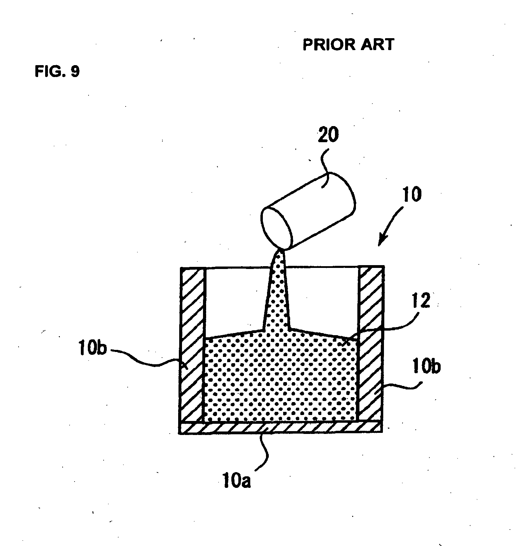

An example of a known conventional method for manufacturing a large silica glass block such as this is disclosed in Japanese Laid-Open Patent Application JP 56-169137. FIG. 7 of the present application is a flow chart showing the process sequence for a conventional method for manufacturing a silica glass block. In this conventional method, as shown in FIG. 8a, 8b, 8c and Fig. 9, a silica raw material powder 12 is charged into a fusing furnace 10 constituted from a furnace floor 10a and furnace wall 10b formed from refractory bricks (zirconia or aluminium or the like) (Step 200 of FIG. 8(a) and FIG. 7). Next, heat 16 is applied by heating means 14 provided in an upper portion of the fusing furnace 10 to fuse the silica raw material powder 12 (Step 202 of FIG. 8(b) and FIG. 7). A thus-obtained fused-state silica glass melt 12a is cooled to produce a silica glass from which a silica glass block 18 is manufactured (Step 204 of FIG. 8 (c) and FIG. 7).

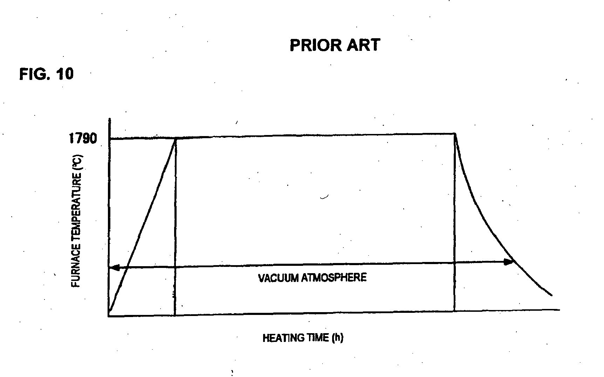

Initially, in the conventional method described above, the silica raw material powder 12 is charged into the fusing furnace 10. While charging the silica raw material powder 12 involves, as shown in FIG. 9, the silica raw material powder 12 being directly charged into the fusing furnace 10 through a raw material drum 20, the powder is blown about as the silica raw material powder 12 is being charged and, as a result, multiple layers (stratified bubbles) are formed. FIG. 10 shows the relationship between the furnace temperature and heating time in the fusing step of the conventional method described above.

Next, without further alteration to the state thereof (loosely packed state in the absence of a powder compacting treatment), the silica raw material powder charged into the fusing furnace is subjected to a preheat treatment. Accordingly, the bubbles are thought to be directly formed from these gaps in the silica raw material powder.

While in the conventional method, as shown in FIG. 10, the temperature is raised to the temperature at which fusing is possible (no less than 1750°C) in a vacuum atmosphere (no more than 13.3 Pa or 0.1 Torr) in a single action to fuse the silica raw material powder subsequent to the silica raw material powder having been charged into the furnace, the moisture and gases generated from within the silica raw material powder and from the furnace material from which the fusing furnace is constituted are not satisfactorily released and remain in the form of air bubbles in the silica glass block. The presence of air bubbles in the interior of a silica glass block formed in this way is directly linked to a drop in the quality of the silica glass block and, accordingly, presents a major problem.

In addition, while the furnace wall and furnace floor are formed using refractory bricks (zirconia or aluminium or the like) as the furnace material and the silica raw material powder is charged and fused therein, the direct contact of the silica raw material powder with the refractory bricks results in a problem of severe contamination from the refractory bricks and, in turn, a marked drop in the manufactured product yield.

### Problems to be Solved by the Invention

With the foregoing problems of the prior art in mind, it is an object of the present invention to provide a method for manufacturing a silica glass block in which, by markedly reducing the bubbles within the silica glass block, the quality of a silica glass block can be improved, contamination of the silica glass block can be prevented, and the yield of the silica glass block can be improved.

### Means to Resolve the Problems

The method for manufacturing a silica glass block for resolving the problems described above is defined in claim 1.

The silica raw material powder employed in the preparing step contains at least 95wt% of silica powder particles of particle diameter in the range 100µm to 400µm, and the impurities contained in the silica raw material powder are ideally Na: no more than 0.5ppm, K: no more than 0.8ppm, Li: no more than .5ppm, Mg: no more than 0.3ppm, Ca: no more than 1 ppm, Al: no more than 25ppm, Fe: no more than 0.5ppm and Cu: no more than 0.1 ppm. Preferably the silica powder particlea show a particle diameter in the range of 106µm to 355µm.

While vibration must be applied to the silica raw material powder packed into said receptacle to raise the packing density thereof, as means for applying the aforementioned vibration, a rod-type vibrator having a surface covered with a silica glass layer is employed as aforementioned means for applying vibration, the silica raw material powder is compacted as a result of the rod-type vibrator being inserted into the silica raw material powder and vibrated, the frequency of the aforementioned vibrator is between 200 and 250Hz, and the aforementioned vibrator is inserted into 400 to 900cm² areas of the aforementioned silica raw material powder.

In a preferred configuration a silica glass plate or a molybdenum sheet is disposed in the furnace floor and furnace wall of the aforementioned fusing furnace to prevent the aforementioned silica raw material powder from coming into direct contact with the refractory bricks. The adoption of a contact-preventing structure based on the use of silica glass plate or molybdenum sheet such as this is advantageous in that the silica raw material powder is prevented from coming into direct contact with the refractory bricks and, accordingly, contamination of the silica glass block from the refractory bricks is prevented.

In an ideal configuration a furnace temperature program of the preheat treatment for removing the aforementioned moisture and gas of the aforementioned preheat treatment includes a step for maintaining a temperature range of between 900°C and 1500°C in a rare gas or H₂ gas atmosphere for between 4 to 12 hours prior to a fusing point of the silica raw material powder being reached, and performing an evacuation and rare gas or H₂ gas introduction treatment at least two times each during the preheat treatment. The preheat treatment is performed at a pressure in the range of from 80 to 93.3 kPa (600 to 700 Torr).

In the invention, a furnace temperature program for heating and fusing the aforementioned preheat-treated silica raw material powder of said fusing step includes a step for maintaining a temperature range of between 1750°C and 1900°C in a vacuum atmosphere of no more than 66.7 Pa (0.5 Torr) for between 70 to 90 hours.

In the aforementioned cooling step, the cooling treatment may use natural cooling and, in addition, a forced slow-cooling treatment may be administered in order to facilitate an even more gradual cooling than that afforded by natural cooling.

### Effects of the Invention

As the quality of a silica glass block can be improved, contamination of the silica glass block can be prevented, and the yield of the silica glass block can be improved by markedly reducing the bubbles within the silica glass block, the effects of the method for manufacturing a silica glass block of the present invention are significant.

### Best Mode for Carrying out the Invention

While the present invention will be hereinafter described with reference to the embodiment modes thereof, it is to be understood that the embodiment modes are provided for illustration alone, and that modifications with the scope of the technical concept of the invention may be made thereto.

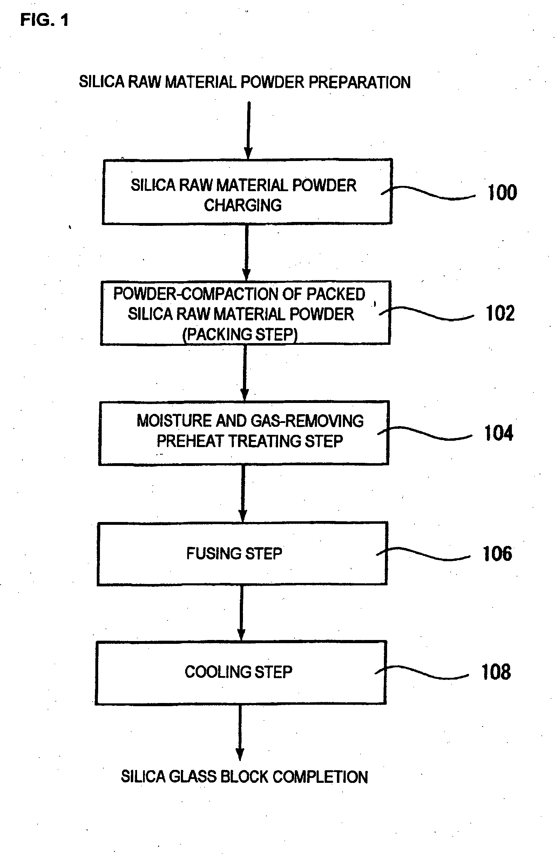

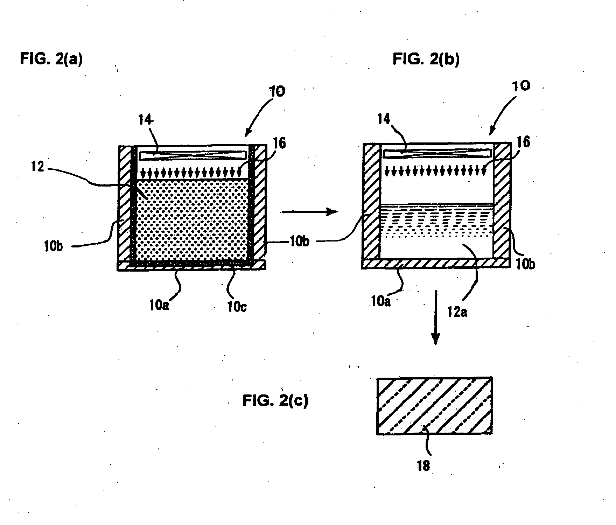

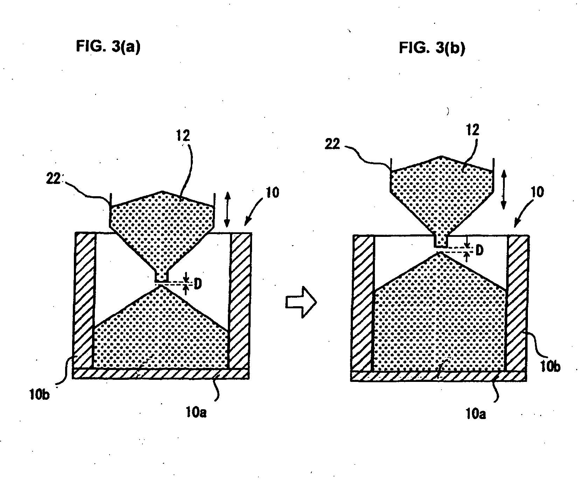

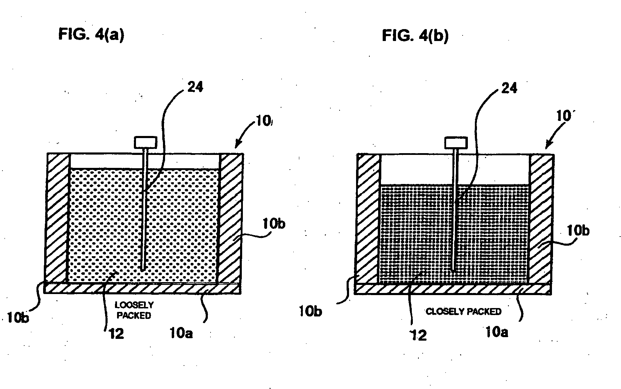

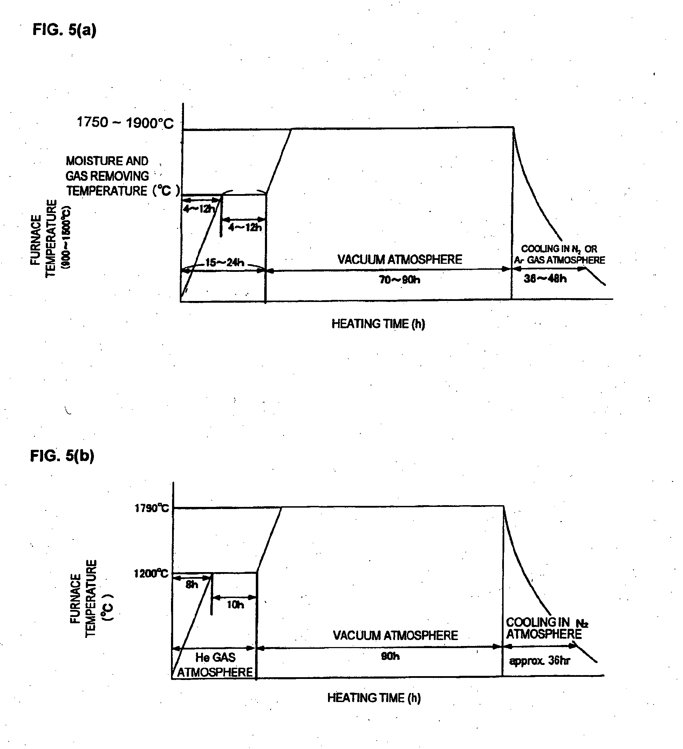

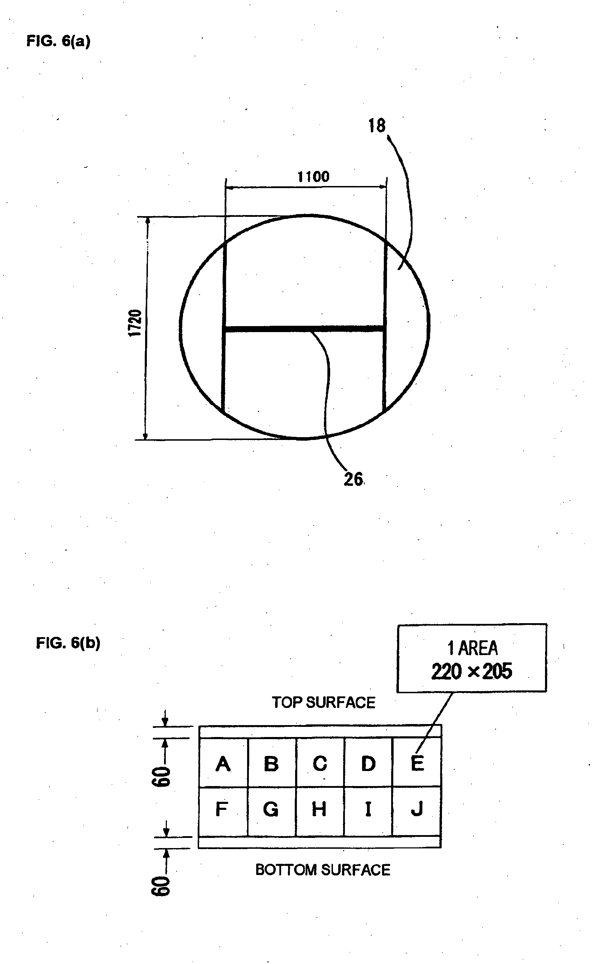

FIG. 1 is a flow chart showing the process sequence of the method for manufacturing a silica glass block of the present invention. The process sequence of the method for manufacturing a silica glass block will be described with reference to FIG. 1. FIG. 2 is a schematic cross-sectional explanatory diagram of the fusing furnace employed in the method for manufacturing a silica glass block of the present invention of which FIG. 2(a) shows a state in which a silica raw material powder has been charged into a fusing furnace, FIG. 2(b) shows a state in which a silica raw material powder charged into a fusing furnace has been fused by heating, and FIG. 2(c) shows a state in which a manufactured silica glass block has been removed from a fusing furnace. The basic configuration of the fusing furnace employed in the present invention is the same as the conventional fusing furnace shown in FIG. 8, and identical component members thereof are described using identical reference symbols. FIG. 3(a)(b) is a schematic cross-sectional explanatory view showing a mode in which a silica raw material powder is charged into a fusing furnace employing a hopper arranged in the fusing furnace of which FIG. 3(a) shows a mode in which the silica raw material powder has been charged using a hopper arranged in the centre section, and FIG. 3(b) shows a mode in which the silica raw material powder has been charged using a hopper arranged in the upper portion. FIG. 4(a)(b) is a schematic cross-sectional explanatory view showing a mode for administering a powder compacting treatment on the silica raw material powder charged into the fusing furnace of which FIG. 4(a) shows a state in which a silica raw material powder lies in a loosely-packed state as a result of the silica raw material powder having being simply charged into the fusing furnace, and FIG. 4(b) shows a state in which the silica raw material powder lies in a closely-packed state as a result of a powder-compacting treatment having been administered on the silica raw material powder using a rod-type vibrator. FIG. 5(a)(b) is a graph showing the control state of the furnace temperature and furnace atmosphere of the fusing furnace as a relationship between heating time and furnace temperature of which FIG. 5(a) is an explanatory diagram of a heating program of an embodiment mode, and FIG. 5(b) shows a heating program of working example 1. FIG. 6(a)(b) is a graph for explaining a method for extracting samples used in bubble testing a silica glass block obtained from the working examples and the comparative example of which FIG. 6(a) shows a silica glass block sample extraction device, and FIG. 6(b) shows a test area divided into ten sections of an extracted sample.

As shown in FIG. 2, a fusing furnace 10 employed in the present invention has a furnace floor 10a and furnace wall 10b formed from refractory bricks (zirconia or aluminium or the like), and is configured from a silica glass plate 10c disposed in such a way as to cover the furnace floor 10a and furnace wall 10b. Silica glass pieces or the like may be employed as the silica glass plate 10c employed to prevent direct contact of the silica raw material powder with the refractory bricks which cause contamination. In addition, replacing the silica glass plate with a molybdenum sheet can produce an identical contamination-prevention effect.

As the silica raw material powder employed in the method for the present invention, a silica raw material powder containing at least 95 wt% of a silica powder particles of particle diameter 355µm to 106µm is employed, and a silica raw material powder in which the impurities are Na: no more than 0.5ppm, K: no more than 0.8ppm, Li: no more than 1.5ppm, Mg: no more than 0.3ppm, Ca: no more than 1ppm, Al: no more than 25ppm, Fe: no more than 0.5ppm and Cu: no more than 0.1ppm is ideally employed.

Initially, in the method of the present invention, a silica raw material powder 12 is charged into a fusing furnace 10 (Step 100 of FIG. 2(a) and FIG. 1). As shown in FIGS.3(a) and (b), the silica raw material powder charging involves a hopper 22 being arranged on the upper portion of the fusing furnace 10 with freedom to move vertically, and the hopper 22 being utilized to charge the silica raw material powder 12 into the fusing furnace 10. As described in the case of the prior art method shown in FIG. 10, charging the silica raw material powder in one action results in the fine powder being blown about and results in the formation of layers (stratified bubbles). In addition, as interruption to the charging also results in the formation of layers, the silica raw material powder must as far as possible be slowly and continuously charged without interruption. An appropriate silica raw material powder charging speed is 10 to 25kg/min. In addition, in such a way as to prevent an excessive increase in a distance D (see FIG. 3) between the surface of the silica raw material powder 12 and an outlet port of the hopper 22, the height of the hopper 22 is adjusted in response to the height of the charged silica raw material powder 12 and, from the standpoint of preventing the powder from being blown about, the silica raw material powder is preferably charged while a certain distance (100 to 200mm) is maintained. As a result of the silica raw material powder 12 being charged into the fusing furnace 10 in this state, the generation of layers or stratified bubbles in the silica glass block is as far as possible able to be prevented.

Next, in order to increase the packing density of the silica raw material powder 12 charged into the fusing furnace 10 and eliminate the gaps in the silica raw material powder 12, in an opened state of a cover (not shown in FIG. 3) of the fusing furnace 10, an operator inserts a rod-type vibrator 24 as shown in FIGS. 4(a) and (b) into the silica raw material powder 12 and compacts the powder by applying vibration to the silica raw material powder 12 (Step 102 of the packing step of FIG. 1). The frequency of the rod-type vibrator 24 employed to compact the powder is of the order of between 200 and 250Hz and, in addition, the surface thereof is preferably covered by a silica glass. By compacting the powder with the rod-type vibrator 24 in this way, the packing density of the silica raw material powder 12 is changed from the loosely-packed state when the silica raw material powder 12 has been simply charged into the furnace of packing density of the order of 1.30g/cm³ to a closely-packed state of packing density of the order of 1.50g/cm³, and bubbles of 1 mm or more in size regarded as being the bubbles for which the formation thereof is attributable to gaps in the silica raw material powder 12 are able to be markedly reduced. Moreover, any means able to apply vibration to the silica raw material powder 12 is suitable as means for increasing the packing density of the silica raw material powder 12 packed into the fusing furnace 10 and, for example, the packing density of the silica raw material powder 12 may also be improved by vibrating the fusing furnace 10.

Next, in the fusing furnace 10 temperature and the furnace atmosphere are controlled in accordance with the furnace temperature program shown in FIG. 5. That is to say, a vacuum atmosphere (of the order of 13.3 Pa or 0.1 Torr) is established in the fusing furnace 10, a treatment gas (for example, rare gas such as an He gas or Ar gas or H₂ gas) is introduced into the fusing furnace 10 until the pressure therein reaches a pressure of the order of 80 to 93.3 kPa (600 to 700 Torr), heat 16 is applied by heating means 14 provided in the upper portion of the fusing furnace 10, the temperature is raised for between 4 to 12 hours until a temperature range for removing moisture and gases is reached (900 to 1500°C), and this temperature is maintained for 4 to 12 hours. An evacuation and treatment gas introduction treatment are preferably implemented at least twice in the preheat treating step during the period when the temperature is maintained. As a result of this treatment, heat is applied to the silica raw material powder 12 of the charged silica raw material powder 12 located in the furnace floor 10a section, and the moisture and gases of the silica raw material powder 12 are completely removed (Step 104 of preheat treating step of FIG. 1).

After the preheat treatment described above is completed, heat 16 is further applied by heating means 14 provided in the upper portion of the fusing furnace 10, and the silica raw material powder 12 is fused to form a silica glass melt 12a (Step 106 of fusing step of FIG. 2(b) and FIG. 1). The fusing treatment of the silica raw material powder 12 of this fusing step is administered by maintaining a fusion temperature range (1750°C to 1900°C) in a vacuum atmosphere of no more than 66.7 Pa (0.5 Torr) for 70 to 90 hours.

The fused-state silica glass melt 12a is cooled to produce a silica glass from which a silica glass block 18 is manufactured (Step 108 of cooling step, of FIG. 2(c) and FIG. 1). While the cooling treatment of this cooling step needs only to utilize natural cooling, a forced slow-cooling treatment in accordance with a slow-cooling program may also be administered to afford cooling even slower than that afforded by natural cooling. Examples of this cooling program treatment include a program in which cooling is performed in a nitrogen gas or Ar gas atmosphere for between 36 and 48 hours.

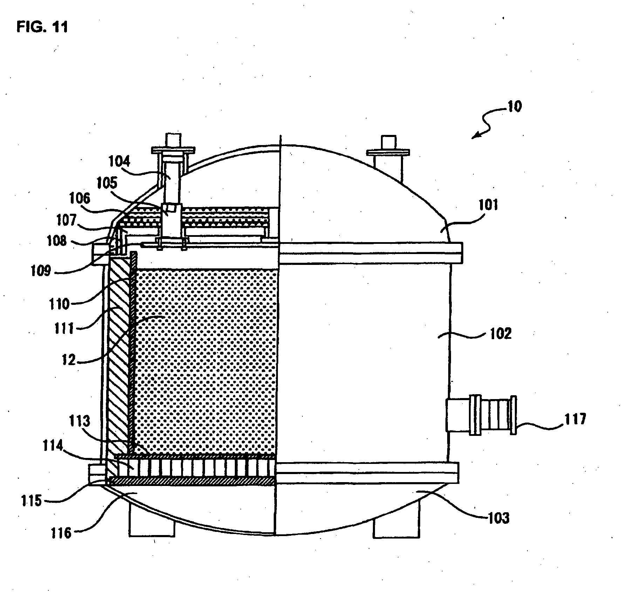

While the structure of the fusing furnace 10 employed in the present invention is as shown in FIG. 2 to FIG. 4, the specific configuration of the fusing furnace suitable for employment in the working examples of the method for the present invention is shown in FIG. 11. The reference symbol 10 in FIG. 11 denotes the fusing furnace. The fusing furnace 10B is configured from an upper dome 101, chamber 102, lower dome 103, copper electrode 104, carbon electrode 105, carbon heat-insulating material 106, carbon heat-insulating material base plate 107, carbon heat-insulating furnace wall 108, carbon heater 109, crucible-side surface (zirconium brick) 110, zirconium bubble heat-insulating material 111, silica raw material powder 12, crucible-base surface (zirconium plate) 113, refractory (refractory brick) 114, base plate 115, packing material (zirconium sand)116, and vacuum exhaust port 117. When operations for charging the silica raw material powder 12 and extracting the manufactured silica glass block and so on are performed, the chamber 102 is pulled sideways in its entirety.

While the present invention will be hereinafter more specifically described with reference to the working examples, it is to be understood that the working examples are provided for illustration and are not limited thereto.

### Example 1

Employing a fusing furnace identical to the fusing furnace shown in FIG. 2 to FIG. 4, a silica glass block was manufactured in accordance with the process sequence shown in FIG. 1 by controlling the furnace temperature and furnace atmosphere in accordance with the furnace temperature program shown in FIG. 5(b). The sequence of the working example will be hereinafter more specifically described in accordance with the various steps thereof.

### 1) Silica raw material powder charging

Employing a fusing furnace as shown in FIG. 2(a) in which the furnace floor and the furnace wall are covered with a silica glass plate and in which a vertically-movable hopper is provided in the upper portion of the fusing furnace as shown in FIGS. 3(a) and (b), the silica raw material powder was initially charged into the hopper. The silica raw material powder used contained 96wt% of a silica powder of particle diameter in the range 355µm to 106µm. As introduction of the silica raw material powder in one action results in the fine powder being blown about and, as a result, the formation of layers (stratified bubbles) and, in addition, interruption to charging also results in the formation of layers, the silica raw material powder must as far as possible be slowly and continuously charged without interruption. The charging speed was adjusted within the range of 10 to 25kg/min. In addition, as shown in FIGS. 3(a) and (b), in such a way as to prevent an excessive increase in a distance D between the surface of the silica raw material powder and an outlet port of the hopper, the height of the hopper was adjusted in response to the height of the charged silica raw material powder, and the silica raw material powder was charged while the predetermined distance D (100 to 200mm) was maintained. As shown in the later-described test results of the thus-obtained silica glass block, a marked reduction in the layers (stratified bubbles) formed in a conventional silica glass block was achieved by implementing this improved charging operation.

### 2) Powder-compacting treatment (Packing step)

In order to raise the packing density of the charged silica raw material powder to remove gaps in the silica raw material powder, the rod-type vibrator (frequency 200H z and surface covered by silica glass) as shown in FIGS. 4(a) and (b) was inserted in the opened state of the cover of the fusing furnace into the charged silica raw material powder, and vibration was applied to the silica raw material powder to effect the compacting thereof. By using a rod-type vibrator to compact the powder in this way, the packing density of the charged silica raw material powder was changed from the loosely-packed state when the silica raw material powder 12 has been simply charged into the furnace of packing density of the order of 1.30g/cm³ to a closely-packed state of packing density of the order of 1.50g/cm³. By administering this compacting treatment on the charged silica raw material powder in this way, as shown by the later-described test results of the thus-obtained silica glass block, bubbles of 1 mm or more in size regarded as being the bubbles attributable to gaps in the silica raw material powder formed in a conventional silica glass block are able to be markedly reduced.

### 3) Moisture and gas-removing preheat treatment (Preheat treating step)

A vacuum atmosphere (0.1Torr) was established in the fusing furnace, then He gas was introduced into the fusing furnace until the pressure reached 700 Torr and, as shown in FIG. 2, the temperature was raised to 1200°C over 8 hours by heating means provided in the upper portion of the fusing furnace, and the temperature was maintained at 1200°C for 10 hours. In addition, an evacuation (13.3 Pa) (0.1 Torr) and He gas introduction treatment was performed twice during the period that the temperature was maintained at 1200°C. While the moisture and gas removal effect demonstrated in the preheat treatment is not marked if heat is not transmitted to the base of the charged silica raw material powder, by maintaining the temperature in the manner noted above and implementing the evacuation and He gas introduction treatment at least twice during this period, heat can be transmitted to the base of the charged silica raw material powder. As shown in the later-described test results of the thus-obtained silica glass block, a marked reduction in the bubbles formed in a conventional silica glass block that are attributable to moisture and gas present in the silica raw material powder can be achieved by implementing this moisture and gas-removing preheat treatment.

### 4) Fusing treatment (Fusing step)

Subsequent to the completion of the moisture and gas-removing preheat treatment described above, further heat was applied in a vacuum atmosphere (no more than 66.7 Pa (0.5 Torr)) by heating means provided in the upper portion of the fusing furnace to raise the temperature to 1790°C, and the temperature was maintained at 1790°C for 90 hours to fuse the charged silica raw material powder.

### 5) Cooling treatment (cooling step)

The fused-state silica glass melt was cooled by natural cooling for approximately 36 hours in a nitrogen gas atmosphere at 0.95 atmospheric pressure to produce a silica glass block (diameter 1700mm x height 620mm).

As shown in FIG. 6(a), a sample 26 of thickness 10mm (length 620mm x width 1100mm) was extracted from the block centre portion of the thus-obtained silica glass block 18 and, as shown in FIG. 6(b), the silica glass plate from which a 60mm contaminated section above and below the sample 26 had been removed was divided into ten areas A to J, and the bubbles in these areas A to J were counted. Table 1 shows the bubble test results for the sample 26 extracted in the manner described above. A comprehensive evaluation based on size and number of the bubbles was carried out and, as shown in Table 1, ○ denotes satisfactory, Δ denotes somewhat satisfactory, and x denotes unsatisfactory.

### Comparative Example 1

Apart from the furnace floor and the furnace wall of the fusing furnace not being covered by a silica glass plate, the raw material drum as shown in FIG. 9 being employed to charge the silica raw material powder (the hopper shown in FIG. 3 was not used), the powder-compacting treatment not being performed, the moisture and gas-removing preheat treatment not being performed, and an evacuation treatment alone being performed (gas introduction treatment not being performed), the silica glass block of this working example was manufactured by a process the same as that employed in Working Example 1, and a bubble test, for which the results thereof are shown in Table 1, was carried out the same way as in Example 1. In addition, a comparatively greater contamination from the furnace material in the thus-obtained silica glass block than in the silica glass block of Example 1 was confirmed.

### Comparative Example 2

Apart from the powder-compacting treatment not being performed, the moisture and gas-removing preheat treatment not being performed, and an evacuation treatment alone being performed (gas introduction treatment not performed), the silica glass block of this working example was manufactured by a process the same as that employed in Example 1, and a bubble test, for which the results thereof are shown in Table 1, was carried out the same way as in Example 1.

### Comparative Example 3

Apart from the moisture and gas-removing preheat treatment not being performed and an evacuation treatment alone being performed (gas introduction treatment not performed), the silica glass block of this working example was manufactured by a process the same as that employed in working Example 1, and a bubble test, for which the results thereof are shown in Table 1, was carried out the same way as in Example 1.

### Comparative Example 4

Apart from the powder-compacting treatment not being performed and a heat treatment and evacuation treatment being performed in the moisture and gas-removing preheat treatment (gas introduction treatment not performed), the silica glass block of this working example was manufactured by a process the same as that employed in Example 1, and a bubble test, for which the results thereof are shown in Table 1, was carried out the same way as in Example 1.

### Comparative Example 5

Apart from the powder-compacting treatment not being performed, the silica glass block of this working example was manufactured by a process the same as that employed in Example 1, and a bubble test, for which the results thereof are shown in Table 1, was carried out the same way as in Example 1.

### Comparative Example 6

Apart from a heat treatment and evacuation treatment being performed in the moisture and gas-removing preheat treatment (gas introduction treatment not being performed), the silica glass block of this working example was manufactured by a process the same as that employed in Example 1, and a bubble test, for which the results thereof are shown in Table 1, was carried out the same way as in Example 1.

The results described above confirmed that, in order to reduce bubbles in a silica glass block, a hopper must be used, a powder-compacting treatment must be performed, and a moisture and gas-removing preheat treatment must be performed. It is also clear from these results that formation of a cover of silica glass on the furnace floor and furnace wall of the fusing furnace is effective for preventing contamination of the silica glass block from the furnace material of the fusing furnace.

Notably, while the temperature employed in the moisture and gas-removing preheat treatment of working Example 1 is indicated as being 1200°C, the same result was found to be able to be achieved in the temperature range between 900°C to 1500°C. In addition, while He gas is employed as the rare gas of the moisture and gas-removing preheat treatment in Example 1, the same effect was found to be able to be obtained using Ar gas or other rare gas or a H₂ gas.

**Table 1: BUBBLE TEST RESULTS**

| | HOPPER | POWDER COMPACTION | MOISTURE AND GAS-REMOVING PREHEAT TREATMENT | BUBBLES | | | |
|---|---|---|---|---|---|---|---|
| | | | | LAYERS | MAXIMUM BUBBLE DIAMETER Φ | BUBBLE NUMBER | EVALUATION |
| EXAMPLE 1 | YES | YES | Heat treatment + Evacuation + gas introduction | NONE | 1mm OR LESS | FEW | ○ |
| COMPARATIVE EXAMPLE 1 | NO | NO | Evacuation only | MANY | 2 TO 3mm | MANY | x |
| COMPARATIVE EXAMPLE 2 | YES | NO | Evacuation only | NONE | 2 TO 3mm | MANY | x |
| COMPARATIVE EXAMPLE 3 | YES | YES | Evacuation only | NONE | 1mm OR LESS | COMPARATIVELY MANY | Δ |
| COMPARATIVE EXAMPLE 4 | YES | NO | Heat treatment + Evacuation | NONE | 1mm OR MORE | COMPARATIVELY MANY | x-Δ |
| COMPARATIVE EXAMPLE 5 | YES | NO | Heat treatment + Evacuation + gas introduction | NONE | 1mm OR MORE | FEW | Δ |
| COMPARATIVE EXAMPLE 6 | YES | YES | Heat treatment + Evacuation | NONE | 1 mm OR LESS | COMPARATIVELY MANY | Δ |

### Brief Description of the Drawings

Fig. 1 is a flow chart showing the process sequence of the method for manufacturing a silica glass block of the present invention;
Fig. 2 is a schematic cross-sectional explanatory view of the fusing furnace employed in the method for manufacturing a silica glass block of the present invention of which FIG. 2(a) shows a state in which a silica raw material powder has been charged into a fusing furnace, FIG. 2(b) shows a state in which a silica raw material powder charged into a fusing furnace has been fused by heating, and FIG. 2(c) shows a state in which a manufactured silica glass block has been removed from a fusing furnace;
Fig. 3 is a schematic cross-sectional explanatory view showing a mode in which a silica raw material powder is charged into a fusing furnace employing a hopper arranged in the fusing furnace of which FIG. 3(a) shows a mode in which the silica raw material powder has been charged using a hopper arranged in the centre section, and FIG. 3(b) shows a mode in which the silica raw material powder has been charged using a hopper arranged in the upper portion;
Fig. 4 is a schematic cross-sectional explanatory diagram showing a mode for administering a powder compacting treatment on the silica raw material powder charged into the fusing furnace of which FIG. 4(a) shows a state in which a silica raw material powder lies in a loosely-packed state as a result of the silica raw material powder having being simply charged into the fusing furnace, and FIG. 4(b) shows a state in which the silica raw material powder lies in a closely-packed state as a result of a powder-compacting treatment having been administered on the silica raw material powder using a rod-type vibrator;
Fig. 5 is a graph showing the control state of the furnace temperature and furnace atmosphere of the fusing furnace as a relationship between heating time and furnace temperature of which FIG. 5(a) is an explanatory diagram of a heating program of an embodiment mode, and FIG. 5(b) shows a heating program of working example 1;
Fig. 6 is a diagram for explaining a method for extracting samples used in bubble testing a silica glass block obtained from the working examples and the comparative example of which FIG. 6(a) shows a silica glass block sample extraction device, and FIG. 6(b) shows a test area divided into ten sections of an extracted sample;
Fig. 7 is a flow chart showing the process sequence of a prior art method for manufacturing a silica glass block;
Fig. 8 is a schematic cross-sectional explanatory view of the fusing furnace employed in a prior art method for manufacturing a silica glass block of which FIG. 8(a) shows a state in which a silica raw material powder has been charged into a fusing furnace, FIG. 8(b) shows a state in which a silica raw material powder charged into a fusing furnace has been fused by heating, and FIG. 8(c) shows a state in which a manufactured silica glass block has been removed from a fusing furnace;
Fig. 9 is a schematic cross-sectional explanatory view of a prior art method showing a mode in which a silica raw material powder is charged into a fusing furnace employing a raw material drum;
Fig. 10 is a graph showing the control state of the furnace temperature and furnace atmosphere of the fusing furnace as a relationship between heating time and furnace temperature of a prior art method; and
Fig. 11 is a partial cross-sectional diagram of a specific configuration of a fusing furnace ideal for employment in the working example of the present invention.

### Explanation of Symbols

- 10:: Fusing furnace
- 10a:: Furnace floor
- 10b:: Furnace wall
- 10c:: Glass plate
- 12:: Silica raw material powder
- 12a:: Silica glass melt
- 14:: Heating means
- 16:: Heat
- 18:: Silica glass block
- 20:: Raw material drum
- 22:: Hopper
- 24:: Rod-type vibrator
- 26:: Sample
- 101:: Upper dome
- 102:: Chamber
- 103:: Lower dome,
- 104:: Copper electrode
- 105:: Carbon electrode
- 106:: Carbon heat-insulating material
- 107:: Carbon heat-insulating material base plate
- 108:: Carbon heat-insulating furnace wall
- 109:: Carbon heater
- 110:: Crucible side surface
- 111:: Zirconia bubble heat-insulating material
- 112:: Silica raw material powder
- 113:: Crucible base surface
- 115:: Carbon base plate
- 116:: Packing material
- 117:: Vacuum exhaust port

## Claims

1. A method for manufacturing a silica glass block, comprising:
- a preparing step for preparing a natural or synthetic silica raw material powder (12);
- a packing step for packing said silica raw material powder (12) into a glass fusing furnace (10) having a furnace floor (10a) and furnace walls (10b) formed from refractory bricks; wherein using a hopper (22) to charge the silica raw material powder (12) into the fusing furnace (10),
- a preheat treating step for preheat treating the silica raw material powder (12) packed into said fusing furnace (10) to remove moisture and gas therefrom;
- a fusing step for heating and fusing said heat preheat-treated silica raw material powder (12); and
- a cooling step for cooling a silica glass melt (12a) fused in said fusing
furnace (10) to produce a silica glass block (18),
**characterized in that**
the silica raw material powder (12) packed into said fusing furnace (10) is closely packed in said packing step to a packing density of a range no less than 1.4g/cm³ and no more than 1.6g/cm³, and
an evacuation and a rare gas or H₂ gas introduction treatment is performed in said preheat treating step,
wherein a furnace temperature program for heating and fusing said preheat-treated silica raw material powder (12) of said fusing step includes a step for maintaining a temperature range of between 1750°C and 1900°C in a vacuum atmosphere of no more than 66.7 Pa (0.5 Torr) for between 70 to 90 hours.

2. The method for manufacturing a silica glass block according to claim 1, **characterized in that** said silica raw material powder (12) employed in said preparing step contains at least 95wt% of silica powder particles of particle diameter in the range 100µm to 400µm.

3. The method for manufacturing a silica glass block according to claims 1 or 2, **characterized in that** vibration is applied to the silica raw material powder (12) packed into said receptacle to increase the packing density thereof.

4. The method for manufacturing a silica glass block according to claim 3, **characterized in that** a rod-type vibrator (24) having a surface covered with a silica glass layer is employed as said means for applying vibration, the silica raw material powder (12) is compacted as a result of the rod-type vibrator (24) being inserted into the silica raw material powder (12) and vibrated, the frequency of said vibrator (24) is between 200Hz and 250Hz, and said vibrator (24) is inserted into 400cm² to 900cm² areas of said silica raw material powder (12).

5. The method for manufacturing a silica glass block according to any of claims 1 to 4, **characterized in that** a silica glass plate (10c) or a molybdenum sheet is disposed on the furnace floor (10a) and furnace wall (10b) of said fusing furnace (10) to prevent said silica raw material powder (12) from coming into direct contact with the refractory bricks.

6. The method for manufacturing a silica glass block according to any of claims 1 to 5, **characterized in that** a furnace (10) temperature program of the preheat treatment for removing said moisture and gas of said preheat treatment includes a step for maintaining a temperature range of between 900°C and 1500°C in a rare gas or H₂ gas atmosphere for between 4 to 12 hours prior to a fusing point of the silica raw material powder (12) being reached at a pressure range of from 80 to 93.3 kPa (600 to 700 Torr) and performing an evacuation and rare gas or H₂ gas introduction treatment at least two times each during this preheat treatment.

7. The method for manufacturing a silica glass block according to any of claims 1 to 6, **characterized in that** the cooling treatment of said cooling step uses natural cooling.

## Patentansprüche

1. Verfahren zur Herstellung eines Siliziumdioxid-Glassteins, umfassend:
- einen vorbereitenden Schritt zur Vorbereitung eines natürlichen oder synthetischen Siliziumdioxid-Rohstoffpulvers (12),
- einen Packungsschritt zum Packen des Siliziumdioxid-Rohstoffpulvers (12) in einen Glasschmelzofen (10) mit einem Ofenboden (10a) und Ofenwänden (10b), die aus Schamottesteinen gebildet sind, wobei ein Trichter (22) zur Befüllung des Schmelzofens (10) mit dem Siliziumdioxid-Rohstoffpulver (12) verwendet wird,
- einen Vorheizbehandlungsschritt zur Vorheizbehandlung des in den Schmelzofen (10) gepackten Siliziumdioxid-Rohstoffpulvers (12), um Feuchtigkeit und Gas aus demselben zu entfernen,
- einen Schmelzschritt zum Erhitzen und Schmelzen des erhitzten Vorheiz-behandelten Siliziumdioxid-Rohstoffpulvers (12), und
- einen Abkühlschritt zum Abkühlen einer in dem Schmelzofen (10) aufgeschmolzenen Siliziumdioxid-Glasschmelze (12a), um einen Siliziumdioxid-Glasstein (18) herzustellen,
**dadurch gekennzeichnet, dass**
das in den Schmelzofen (10) gepackte Siliziumdioxid-Rohstoffpulver (12) in dem Packungsschritt dicht gepackt wird bis zu einer Packungsdichte in einem Bereich von nicht weniger als 1,4 g/cm³ and nicht mehr als 1,6 g/cm³, und
in dem Vorheiz-Behandlungsschritt eine Evakuierung und eine Behandlung durchgeführt wird, ber der Edelgas- oder H₂-Gas eingeführt wird,
wobei ein Ofentemperaturprogramm zum Erhitzen und Aufschmelzen des erhitzten Vorheiz-behandelten Siliziumdioxid-Rohstoffpulvers (12) des Schmelzschritts einen Schritt zum Aufrechterhalten eines Temperaturbereichs von zwischen 1750°C und 1900°C in einer Vakuumatmosphäre von nicht mehr als 66,7 Pa (0,5 Torr) für eine Dauer zwischen 70 bis 90 Stunden beinhaltet.

2. Verfahren zur Herstellung eines Siliziumdioxid-Glassteins nach Anspruch 1,
**dadurch gekennzeichnet, dass** das in dem vorbereitenden Schritt eingesetzte Siliziumdioxid-Rohstoffpulver (12) mindestens 95 Gew.-% Siliziumdioxid-Pulverteilchen mit einem Teilchendurchmesser im Bereich von 100 µm bis 400 µm enthält.

3. Verfahren zur Herstellung eines Siliziumdioxid-Glassteins nach Anspruch 1 oder 2, **dadurch gekennzeichnet, dass** das in das Behältnis gepackte Siliziumdioxid-Rohstoffpulver (12) Vibrationen ausgesetzt wird, um dessen Packungsdichte zu erhöhen.

4. Verfahren zur Herstellung eines Siliziumdioxid-Glassteins nach Anspruch 3,
**dadurch gekennzeichnet, dass** ein stabförmiger Rüttler (24) mit einer Oberfläche, die mit einer Siliziumdioxid-Glasschicht überzogen ist, als Mittel zur Anwendung von Vibrationen eingesetzt wird, das Siliziumdioxid-Rohstoffpulver (12) infolge der Einführung des stabförmigen Rüttlers (24) in das Siliziumdioxid-Rohstoffpulver (12) verdichtet und Vibrationen ausgesetzt wird, die Frequenz des Rüttlers (24) zwischen 200 Hz und 250 Hz beträgt und der Rüttler (24) in Bereiche des Siliziumdioxid-Rohstoffpulvers (12) mit eienr Größe von 400 cm² bis 900 cm² eingeführt wird.

5. Verfahren zur Herstellung eines Siliziumdioxid-Glassteins nach einem der Ansprüche 1 bis 4, **dadurch gekennzeichnet, dass** eine Siliziumdioxid-Glasplatte (10c) oder ein Molybdänblech auf dem Ofenboden (10a) und den Ofenwänden (10b) des Schmelzofens (10) angebracht ist, damit das Siliziumdioxid-Rohstoffpulver (12) nicht in direkten Kontakt mit den Schamottesteinen kommt.

6. Verfahren zur Herstellung eines Siliziumdioxid-Glassteins nach einem der Ansprüche 1 bis 5, **dadurch gekennzeichnet, dass** ein Ofen (10)-Temperaturprogramm der Vorheizbehandlung zur Entfernung von Feuchtigkeit und Gas der Vorheizbehandlung einen Schritt zum Aufrechterhalten eines Temperaturbereichs zwischen 900°C und 1500°C in einer Edelgas- oder H₂-Gasatmosphäre für eine Dauer zwischen 4 bis 12 Stunden vor Erreichen eines Aufschmelzpunkts des Siliziumdioxid-Rohstoffpulvers (12) in einem Druckbereich von 80 bis 93,3 kPa (600 bis 700 Torr) und zum mindestens zweimaligen Durchführen einer Evakuierung und Edelgas- oder H₂-Gas-einführenden Behandlung im Verlauf der Vorheizbehandlung beinhaltet.

7. Verfahren zur Herstellung eines Siliziumdioxid-Glassteins nach einem der Ansprüche 1 bis 6, **dadurch gekennzeichnet, dass** bei der Abkühlbehandlung des Abkühlschritts eine natürliche Abkühlung eingesetzt wird.

## Revendications

1. Procédé de fabrication d'un bloc de verre de silice, comprenant :
- une étape de préparation pour préparer une poudre de matière brute de silice (12) naturelle ou synthétique ;
- une étape de tassement pour tasser la poudre de matière brute de silice (12) dans un four de fusion du verre (10) présentant un plancher de four (10a) et des parois de four (10b) fabriqués en briques réfractaires ; dans lequel une trémie (22) est utilisée pour tasser la poudre de matière brute de silice (12) dans le four de fusion (10),
- une étape de traitement par pré-chauffage pour traiter la poudre de matière brute de silice (12) tassée dans le four de fusion (10) par un pré-chauffage afin de retirer l'humidité et les gaz de celle-ci ;
- une étape de fusion pour chauffer et mettre en fusion la poudre de matière brute de silice (12) traitée par pré-chauffage ; et
- une étape de refroidissement pour refroidir une fonte de verre de silice (12a) fondue dans le four de fusion (10) pour produire un bloc de verre de silice (18), **caractérisé en ce que**
la poudre de matière brute de silice (12) tassée dans le four de fusion (10) est fortement tassée dans l'étape de tassement à une densité de tassement dans une plage supérieure ou égale à 1,4 g/cm³ et inférieure ou égale à 1,6 g/cm³, et
un traitement par évacuation et introduction de gaz rare ou de gaz H₂ est effectué dans l'étape de traitement par pré-chauffage,
sachant qu'un programme de température du four pour chauffer et mettre en fusion la poudre de matière brute de silice (12) traitée par pré-chauffage de l'étape de fusion, comprend une étape pour maintenir une plage de température entre 1750°C et 1900°C dans une atmosphère sous-vide inférieure ou égale à 66,7 Pa (0,5 Torr) entre 70 et 90 heures.

2. Procédé de fabrication d'un bloc de verre de silice selon la revendication 1, **caractérisé en ce que** la poudre de matière brute de silice (12) employée dans l'étape de préparation contient au moins 95 % en poids de particules de poudre de silice dont le diamètre de particule est situé dans la plage de 100 µm à 400 µm.

3. Procédé de fabrication d'un bloc de verre de silice selon la revendication 1 ou 2, **caractérisé en ce que** des vibrations sont appliquées à la poudre de matière brute de silice (12) tassée dans le réceptacle pour augmenter la densité de tassement de celle-ci.

4. Procédé de fabrication d'un bloc de verre de silice selon la revendication 3, **caractérisé en ce qu'**un vibrateur de type à tige (24) présentant une surface recouverte d'une couche de verre de silice est employé en tant que ledit moyen pour appliquer des vibrations, la poudre de matière brute de silice (12) étant compactée du fait que le vibrateur de type à tige (24) a été inséré dans la poudre de matière brute de silice (12) et a vibré, la fréquence du vibrateur (24) est située entre 200 Hz et 250 Hz, et le vibrateur (24) est inséré dans des surfaces de 400 cm2 à 900 cm² de poudre de matière brute de silice (12) .

5. Procédé de fabrication d'un bloc de verre de silice selon l'une quelconque des revendications 1 à 4, **caractérisé en ce qu'**une plaque de verre de silice (10c) ou une feuille de molybdène est déposée sur le plancher du four (10a) et la paroi du four (10b) du four de fusion (10) pour éviter que la poudre de matière brute de silice (12) n'entre en contact direct avec les briques réfractaires.

6. Procédé de fabrication d'un bloc de verre de silice selon l'une quelconque des revendications 1 à 5, **caractérisé en ce qu'**un programme de température du four (10) du traitement par pré-chauffage pour retirer l'humidité et les gaz dudit traitement par pré-chauffage comprend une étape pour maintenir une plage de température entre 900°C et 1500°C dans une atmosphère sous gaz rare ou H2 pendant 4 à 12 heures avant qu'un point de fusion de la poudre de matière brute de silice (12) ne soit atteint à une plage de pression de 80 à 93,3 kPa (600 à 700 Torr) et pour effectuer un traitement par évacuation et introduction de gaz rare ou de gaz H₂ au moins deux fois chacune pendant ce traitement par pré-chauffage.

7. Procédé de fabrication d'un bloc de verre de silice selon l'une quelconque des revendications 1 à 6, **caractérisé en ce qu'**un refroidissement naturel est utilisé dans le traitement par refroidissement de l'étape de refroidissement.
